# EUROPÄISCHE PATENTSCHRIFT

(11) **EP 2 932 000 B1**
(45) Veröffentlichungstag und Bekanntmachung des Hinweises auf die Patenterteilung: **21.08.2019**
(21) Anmeldenummer: 13840158.3
(22) Anmeldetag: 11.12.2013
(51) Int. Cl.: E05B 85/26, E05B 77/40

(54) **VERFAHREN ZUM HERSTELLEN VON KRAFTFAHRZEUGSCHLÖSSERN MIT SCHRÄGER HAUPTRASTKONTUR UND EIN KRAFTFAHRZEUGSCHLOSS**
METHOD FOR PRODUCING MOTOR VEHICLE LOCKS WITH AN OBLIQUE MAIN LATCH CONTOUR AND A MOTOR VEHICLE LOCK
PROCÉDÉ DE FABRICATION DE SERRURES DE VÉHICULES À MOTEUR COMPORTANT UN CONTOUR D'ENCASTREMENT PRINCIPAL OBLIQUE ET UNE SERRURE DE VÉHICULES À MOTEUR

(30) Priorität: 11.12.2012 DE 102012024209
(43) Veröffentlichungstag der Anmeldung: 21.10.2015
(73) Patentinhaber: Kiekert Aktiengesellschaft, 42579 Heiligenhaus (DE)
(72) Erfinder: BENDEL, Thorsten, 46149 Oberhausen (DE); POHLE, Werner, 44329 Dortmund (DE); WALDMANN, Thomas, 45468 Mülheim Ruhr (DE)
(86) Internationale Anmeldenummer: PCT/DE2013/000770
(87) Internationale Veröffentlichungsnummer: WO 2014/090215

(56) Entgegenhaltungen:
- DE-A1-102007 060 626
- DE-A1-102010 009 141

## Beschreibung

Die Erfindung betrifft ein Verfahren zum Herstellen der Gesperreteile Drehfalle und Sperrklinke eines Kraftfahrzeugschlosses und ein Kraftfahrzeugschloss mit einer Drehfalle und einer die Drehfalle im Schließzustand arretierenden Sperrklinke,

DE 10 2007 060 626 A1 beschreibt schwenkbar oder verschiebbar gelagerte Paare von In Kontakt bringbaren Kraftübertragungselementen für Verstelleinrichtungen in Kraftfahrzeugen mit Oberflächenstrukturen in Gestalt von Schneidriefen. die durch Stanzen aus in einem flächigen Basismaterial erzeugt wurden und beim Ineingriffbringen oder Außereingriffbringen auch auf Reibung beansprucht werden. Die Oberflächenstrukturen des einen Kraftübertragungselements verlaufen winklig zu den Oberflächenstrukturen des anderen Kraftübertragungselements.

Aus der DE 10 2010 009 141 A1 ist es bekannt, besonders ausgebildete Bügelschenkel vorzusehen, um eine geräuscharme und die auftretenden Kräfte beim Fahren des Kraftfahrzeuges optimal übertragende Ausführungen zu erzielen. Die Außenwand des Bügelschenkels ist mit einer Oberflächenstruktur insbesondere im Kontaktbereich versehen, die aus schräg zur Längsachse des Bügelschenkels verlaufenden Rillen oder entsprechenden Stegen besteht. Neben der entsprechenden Ausbildung des Bügelschenkels ist es nach der Lehre der DE 10 2010 009 141 A1 auch bekannt, die Drehfalle im Bereich der Aufnahme mit einer gleichen oder ähnlichen Oberflächenstruktur wie die eines Bügelschenkels auszurüsten, um insbesondere das sogenannte Knarzen zu vermelden. Die entsprechenden in dieser Schrift offenbarten Lösungen sehen alle künstliche Oberflächenstrukturen aus Stegen bzw. Rillen vor, die also in einem gesonderten Arbeitsvorgang auf die bereits vorhandene Oberfläche des Bügelschenkels oder auch der Drehfalle aufgebracht werden sollen. Nicht beachtet ist bei diesen Lösungen, dass beim eigentlichen Herstellen des Bügelschenkls und insbesondere der Gesperreteile Drehfalle und Sperrklinke auf den korrespondierenden Rastflächen eine das Knarzen begünstigende Oberfläche vorhanden ist. Beim Stanzen entstehen auf den Kantenoberflächen Riefen und Rillen, die insbesondere beim Wegschwenken der Sperrklinke ineinander greifen können.

Der vorliegenden Erfindung liegt nun die Aufgabe zugrunde, die Geräusche, die beim Öffnen und auch Schließen des Kraftfahrzeugschlosses im Bereich der Rastflächen von Drehfalle und Sperrklinke entstehen, auf ein Minimum zu bringen.

Diese Aufgabe wird durch die Gegenstände der unabhängigen Ansprüche gelöst.

Beim Stanzen der Gesperreteile mit der üblichen Stanztechnik entstehen auf der Kantenoberfläche der Gesperreteile im Rastbereich beider Gesperreteile gerade verlaufende Konturen, die beim Öffnen und Schließen des Kraftfahrzeugschlosses, d. h. beim Einlegen der Sperrklinke aufeinander reiben und damit Geräusche verursachen, die auch als Knarzen bezeichnet werden. Dadurch, dass gem. der Erfindung im Rastbereich vorzugsweise der Sperrklinke eine gesonderte schräge Kontur aufgebracht wird, kann es nicht zu den nachteiligen Geräuschen können, weil die Gleitreibung durch das punktförmige Aufeinanderliegen der beiden Gesperreteile im Rastbereich zu einer Behinderung durch die gerade und die schräge Kontur nicht kommen kann. Beispielsweise auf der Drehfalle ist im Bereich der Rastflächen eine gerade Kontur, d. h. die Stanzkontur vorhanden, während durch ein gesondertes Werkzeug im korrespondieren Rastbereich der Sperrklinke gezielt eine schräge Kontur erzeugt ist. Eine deutliche Verringerung der Geräusche beim Öffnen und Schließen der Kraftfahrzeugtür ist damit erreicht. Nach einer zweckmäßigen Ausführungsform der Erfindung ist vorgesehen, dass mit Hilfe der Nachbearbeitung am Gesperreteil über mechanischen Abtrag im Rastbereich die schräge Kontur eingebracht wird, Als Werkzeuge können beliebige Werkzeuge eingesetzt werden, bevorzugt sind es aber Werkzeuge, die einen mechanischen Abtrag am Gesperreteil vornehmen. Es werden also gezielt schräg verlaufende Riefen oder Rillen erzeugt, die dann mit den gerade verlaufenden Stanzriefen des anderen Gesperreteils nur eine gezielte Überdeckung in bestimmten Punkten aufweisen, was zu der schon beschriebenen Geräuschreduzierung führt.

Eine weitere zweckmäßige Ausführung sieht vor, dass im ersten Verfahrensschritt gestanzt und dann in einem zweiten oder weiteren Verfahrensschritt eine schräge Kontur am Gesperreteil, vorzugsweise der Sperrklinke eingefräst wird. Mit einem solchen Fräser kann eine schräge iKontur an der Sperrklinke gezielt und auch in einer gezielten Ausprägung erzeugt werden, wobei dies auch in Abhängigkeit der auf dem anderen Gesperreteil vorhandenen Stanzriefen erfolgt.

Wichtig ist es also, die Kontur im Rastbereich beider Gesperreteile unterschiedlich geneigt auszubilden, sodass deutlich weniger Berührungspunkte zwischen beiden Oberflächen vorhanden sind. Dies erreicht man gemäß der Erfindung insbesondere dadurch, dass als schräge Kontur Riefen und/oder Bearbeitungsrillen ins Gesperreteil/Rastbereich eingebracht werden, die im Gegensatz zu den geradlinigen Stanzriefen in einem Winkel versetzt in die Rastfläche des Gesperreteils eingeformt werden. Während die Stanzriefen geradlinig sind, werden also die in einem gesonderten Bearbeitungsschritt erzeugten Riefen oder Rillen so schräg dazu verlaufend angeordnet, dass es wie schon erwähnt immer zu einer bestimmten Überdeckung der Stanzriefen und Riefen kommt. Ein Ineinandergreifen oder gar Vorrasten der Stanzriefen ibeider Gesperreteile ist ausgeschlossen. Ergänzend zu der eben beschriebenen Ausführungsform ist vorgesehen, dass die Riefen und/oder Bearbeitungsrillen abhängig von der Dicke des Gesperreteils und dem Abstand der zu erwartenden Riefen/Rillen unter einem Winkel von 5 - 15° und mit einer Überdeckung von mindestens zwei Riefen/Rillen der schrägen, Riefen/Rillen und der geraden Stanzriefen des gegenüberliegenden Gesperreteils in das im Nachhinein zu bearbeitende Gesperreteil eingeformt werden. Die im Nachhinein erzeugten Riefen und/oder Bearbeitungsrillen laufen dabei auch im Winkel zu den beim Stanzen des entsprechenden Bearbeitungsteils also vorzugsweise der Sperrklinke erzeugten Stanzriefen im Winkel, wobei diese Stanzriefen nicht im Kontakt zu den geraden Stanzriefen des gegenüberliegenden Gesperreteils kommen können, weil die im Nachhinein erzeugten Riefen und/oder Bearbeitungsrillen ausgeprägter als die vorhandenen Stanzriefen sind.

Vorrichtungsgemäß wird die Aufgabe dadurch gelöst, dass ein Gesperreteil, vorzugsweise die Sperrklinke in der Rastfläche eine, nach dem Stanzen gesondert erzeugte schräge Kontur aufweist, während das andere Gesperreteil, d. h, die Drehfalle mit einer beim Stanzen erzeugten geradlinige Riefen aufweisenden Stanzkontur ausgerüstet ist, und der Winkel zwischen den geraden Stanzriefen und den schräg gestellten Riefen der schrägen Kontur 5 bis 15° beträgt.

Beide Gesperreteile weisen gemäß dieser Ausführung unterschiedliche Konturen auf, die gewährleisten, dass insbesondere während des Öffnungsvorganges die sich verschwenkende Sperrklinke wenn Überhaupt nur noch eine geringe Geräuschbelastung erzeugt. Dies wird dadurch erreicht, dass beispielsweise die Sperrklinke eine gesondert erzeugte schräge Kontur aufweist, während die Drehfalle nur über die beim Stanzen erzeugten geraden Riefen bzw. eine entsprechende Stanzkontur verfügt. Beide Oberflächen liegen somit nicht vollflächig aufeinander, sondern nur im Bereich der Überdeckung der entsprechenden Konturen, sodass die Geräuschbelastung gezielt reduziert wird.

Gemäß der erfindungsgemäßen Lehre werden vorzugsweise auf der Sperrklinke schräge Riefen in einem gesonderten Arbeitsvorgang erzeugt. Um die Form und damit letztlich die Wirkung dieser Riefen optimal gestalten zu können, sieht die Erfindung vor, dass die schrägen Riefen auf der Rastfläche der Sperrklinke in Form von Fräsrillen ausgebildet sind. Sowohl die Form wie die Schräge der Fräserillen kann so genau eingestellt werden, sodass die entsprechend erzeugten schrägen Riefen/Fräsrillen dann eine immer gleichförmige Gleitreibung auf der Rastfläche der Drehfalle bzw. den dort vorhandenen Stanzriefen gewährleistet.

Weiter vorn ist darauf hingewiesen worden, dass die Ausbildung von Drehfalle und Sperrklinke mit jeweils gerade verlaufenden Stanzriefen zu einem nachteiligen ineinander greifen der Riefen führen kann. Dies wird mit den erfindungsgemäß ausgebildeten Gesperreteilen vermieden, da die Riefen auf den Rastflächen der Gesperreteile ein Ineinandergreifen der Stanzriefen und der gesondert eingebrachten Riefen unterbindend ausgebildet sind. Dies ist insbesondere. mit den beschriebenen Fräsrillen zu erreichen, da man die; Form und die Höhe entsprechender Riefen bzw. Fräsrillen dann genau vorgeben kann.

Um die gewünschte Überdeckung zwischen den geraden Stanzriefen und den schräg verlaufenden Riefen auf der Sperrklinke sicherzustellen, ist es zweckmäßig, wenn der Winkel zwischen den geraden Stanzriefen und den schräg gestellten Riefen abhängig von der Dicke des Gesperreteils und dem Abstand der geraden Stanzriefen 5 -15 ° beträgt. optimalen Überdeckung der geraden Stanzriefen und der schräg gestellten Riefen.

Die weitere zweckmäßige Ausführungsform der vorliegenden Erfindung ist die, bei der die schräg gestellten Riefen in Öffnungsrichtung der Sperrklinke geneigt verlaufend angeordnet sind. Dadurch wird der besonderen Belastung Rechnung getragen, die beim Öffnen, d. h. beim Verschwenken der Sperrklinke aus der Schließposition auftreten, weil dann beide Gesperreteile unter Umständen auch begünstigt durch die Bewegungen des Kraftfahrzeuges besonders dicht aneinander gedrückt sind. Beim Wiederschließen des Kraftfahrzeugschlosses und damit Zurückschwenken der Sperrklinke in die Rastposition ist das Aufeinandergleiten beider Gesperreteile weniger druckbelastet.

Die Erfindung zeichnet sich insbesondere dadurch aus, dass mit einem ausgesprochen geringen zusätzlichen Herstellungsaufwand ein Kraftfahrzeugschloss geschaffen ist, bei dem Drehfalle und Sperrklinke im Kontaktbereich, d. h, in der Rastfläche und dabei bevorzugt in der Hauptrastfläche so ausgebildet sind, dass damit die Verringerung der Geräuschbelastung insbesondere durch eine Verringerung der Gleitreibung erreicht wird, Beide Gesperreteile werden zunächst gestanzt und dann wird die Oberfläche vorzugsweise der Sperrklinke im Bereich der Rastfläche gesondert bearbeitet, um damit eine schräg verlaufende Kontur zu erreichen. Insbesondere wird dies dadurch erreicht, dass die schräge Kontur an der Sperrklinke eingefräst wird. Die so entstehenden Bearbeitungsrillen können je nach Zweckmäßigkeit ausgebildet sein und gewährleisten auf jeden Fall, dass die geraden Rillen/Riefen und die schrägen Riefen zu einer deutlich verringerten Berührung beider Oberflächen bzw. Rastflächen führen.

Weitere Einzelheiten und Vorteile des Erfindungsgegenstandes ergeben sich aus der nachfolgenden Beschreibung der zugehörigen Zeichnung, in der eine Ausführung mit nicht erfindungsgemäßen Winkeln zwischen den geraden Stanzriefen und den schräg gestellten Riefen dargestellt ist. Es zeigen:
Figur 1 eine Draufsicht auf ein Kraftfahrzeugschloss im Schließzustand,
Figur 2 eine vergrößerte Wiedergabe der Kantenansicht, hier der Drehfalle im Bereich der Rastflächen,
Figur 3 eine vergrößerte Wiedergabe der Rastfläche der Sperrklinke mit schräg verlaufenden Riefen,
Figur 4 eine Draufsicht ähnlich Figur 3 mit den schräg verlaufenden Riefen und den angedeuteten geradlinigen Riefen der Drehfalle mit den Überdeckungspunkten und
Figur 5 mit eine perspektivischen Wiedergabe der Drehfalle mit der Kantenausbildung.

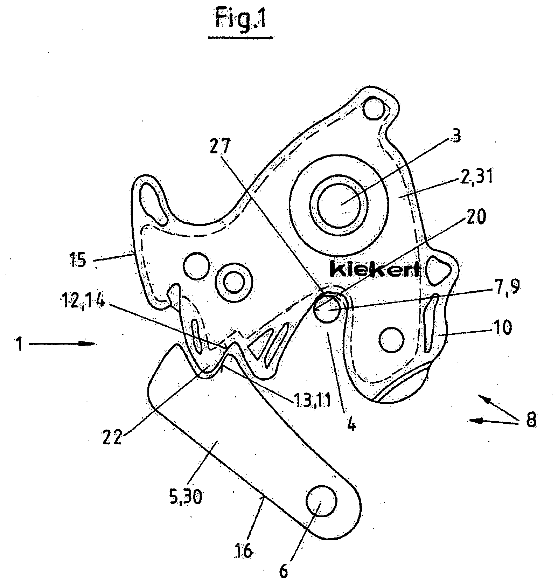

Figur 1 zeigt die Draufsicht auf ein Kraftfahrzeugschloss 1 , in dem die sich um die Achse 3 bewegende Drehfalle 2 den Bügelschenkel 9 des Schlossbügels 7 umfasst. Hier ist also der Schließzustand eines entsprechenden Kraftfahrzeugschlosses 1 wiedergegeben. Dabei ist die Drehfalle 2 über die um die Klinkenachse 6 verschwenkbare Sperrklinke 5 gesichert, d. h. das Kraftfahrzeugschloss 1 kann nur wieder geöffnet werden, wenn die Sperrklinke 5 zuvor weggeschwenkt ist, was über den hier nicht wiedergegebenen Handgriff der Tür möglich ist. Der Bügelschenkel 9 ist über die Aufnahme 4 bis zum Tiefengrund 27 an die Drehfalle 2 herangefahren und sichert so den Schließzustand auch der hier nicht gezeigten Fahrzeugtür, wobei die Gesperreteile 30, 31, d. h. Sperrklinke 5 und Drehfalle 2 Teile der Kraftfahrzeugtür sind, während der Schlossbügel 7 mit dem Bügelschenkel 9 an der Karosserie des Kraftfahrzeuges festgelegt sind.

Die Gesperreteile 30, 31 des Gesperres 8 werden in einem mehrteiligen Stanzvorgang aus entsprechenden Blechen hergestellt, wobei an den von der Ummantelung 10 freigehaltenen Rastflächen 12, 13 zunächst bei beiden Gesperreteilen 30, 31 die Oberfläche durch eine Stanzkontur 14 gekennzeichnet ist. Diese Oberflächenausbildung ist aber im Bereich der Rastfläche 13 durch eine Nachbearbeitung geändert, in dem dort die Stanzkontur wie noch weiter hinten erläutert geändert ist. Dadurch entsteht eine mit 11 bezeichnete Kontur, die zu einer wesentlich gleichförmigeren Reibung beider Gesperreteile 30, 31 im Bereich ihrer Rastflächen 12, 13 führt.

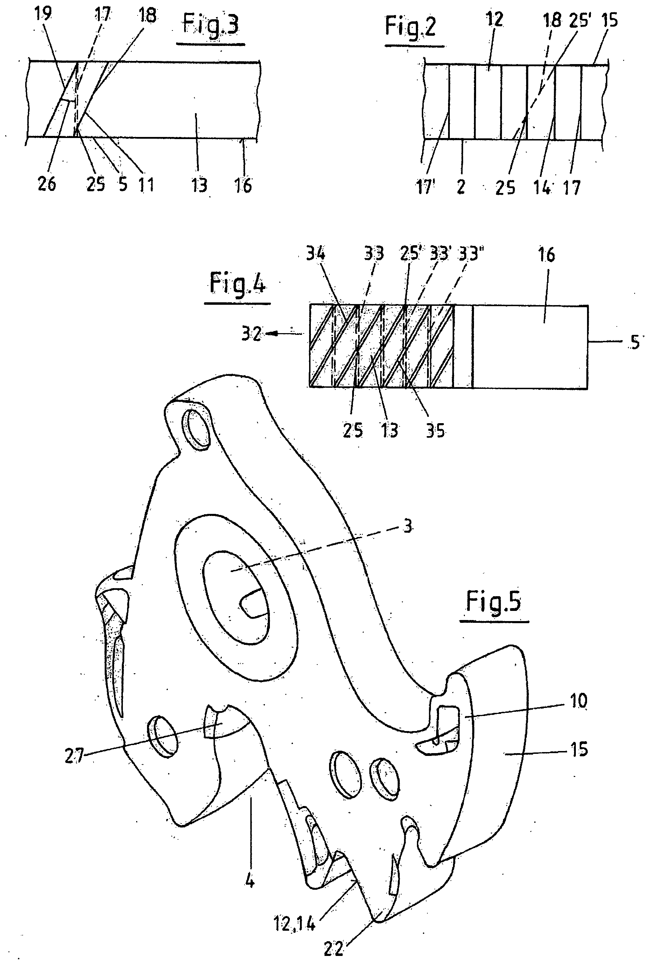

Nicht besonders hervorgehoben ist, dass die Kanten 15, 16 von Drehfalle 2 und Sperrklinke 5 mit einer Kunststoffummantelung 10 versehen sind, Die Kanten 15, 16 sind somit von einer solchen Ummantelung 10 verhüllt. Lediglich im Bereich der Rastflächen 12, 13 und auch der Kontaktfläche 20 ist diese Ummantelung 10 nicht vorhanden, sodass dort die gewählte Oberflächenstruktur, wie sie aus den nachfolgenden Figuren 2 - 5 zu entnehmen ist, wirksam werden kann. Die Oberflächenstruktur, die nachfolgend noch erläutert wird, sorgt für eine Geräuschminimierung und eine Gleitreibungsminimierung, wobei beides zusammen wirkt.

Figur 2 zeigt den Bereich der Rastfläche 12 auf der Drehfalle 2, die beim Öffnen und Schließen des Kraftfahrzeugschlosses 1 mit der Rastfläche 13 auf der Sperrklinke 5 korrespondieren muss. Dies bedeutet, dass die beiden Gesperreteile 30, 31 beim Öffnen und Schließen des Kraftfahrzeugschlosses 1 im Bereich ihrer Rastflächen 12, 13 aneinander oder bezüglich der Kanten 15, 16 sogar aufeinander reiben, was insbesondere bei den in Figur 2 gezeigten gerade verlaufenden Riefen 17 zu Problemen führen kann, wenn auch die Rastflächen 13 auf der Sperrklinke 5 gleiche, d. h. gerade verlaufende Riefen aufweisen sollte. Dies ist aber wie der Vergleich von Figur 2 und 3 zeigen, hier vermieden; in dem die Kontur 11 der Rastfläche 13 durch schräge oder schräg verlaufende Riefen 18, 19 gekennzeichnet ist. Diese Riefen 18, 19 insbesondere im Bereich der Hauptrast 22 (Figur 2, 5) führen zu einer Verringerung der Gleitreibung und der entstehenden Reibgeräusche, weil wie in Figur 4 verdeutlicht die Stanzriefen 33, 33', 33" mit den Bearbeitungsrillen 34, 35 nur an wenigen Punkten eine Überdeckung 25, 25' aufweisen. Bei den Bearbeitungsrillen 34, 35 handelt es sich um Fräsrillen, die über eine Nachbearbeitung in die Rastfläche 13 der Sperrklinke 5 eingebracht sind. Die Bearbeitungsrillen 34, 35 oder auch schräge Riefen 18, 19 laufen unter einem Winkel 26 von 5 - 15°, vorzugsweise 5 - 8°. Wichtig ist, dass es zu den geschilderten Überdeckung 25, 25' kommt, um auf diese Art und Weise die Bewegung der Sperrklinke 5 auf der Drehfalle 2 nicht zu beeinträchtigen und eine gleichmäßige Bewegung zu sichern, die wegen der wenigen Überdeckungspunkte zu der gewünschten Geräuschreduzierung führt, Figur 4 macht weiter deutlich, dass die Bearbeitungsrillen 34, 35 in Öffnungsrichtung 32 der Sperrklinke 5 verlaufen bzw. angeordnet sind, sodass sie einen Zusatzeffekt beim Öffnen der Sperrklinke 5 erbringen,

Figur 5 schließlich zeigt eine perspektivische Ansicht einer Drehfalle 2, die um die hier nicht dargestellte Achse 3 verschwenkbar ist, Beim Verschwenken der Drehfalle 2 wird der Bügelschenkel 9, der in Figur 5 nicht wiedergegeben ist, in die Aufnahme 4 eingeführt oder von dieser befreit, sodass die Kraftfahrzeugtür geöffnet werden kann oder sich eben schließt und dann in der Schließposition arretiert wird. Dazu dient ergänzend die Sperrklinke 5.

In Figur 5 deutlich erkennbar ist, dass durch das Stanzen der Drehfalle 2 eine deutlich erkennbare Kante 15 entsteht, deren Oberfläche wie weiter vorn erläutert durch die Stanzkontur 14 auf der Rastfläche 12 gekennzeichnet ist; diese Stanzkontur 14 ist hier nur angedeutet, Die Rastfläche 12 kennzeichnet die Hauptrast 22, d. h. die Position, in der die Sperrklinke 5 die Drehfalle 2 in der Schließposition an einem Rückschwenken hindert. Dann liegt wie ebenfalls schon erwähnt die Rastfläche 13 der Sperrklinke 5 auf der Rastfläche 12 der Drehfalle 2 auf. Die Drehfalle 2 ist dann durch die hier nicht dargestellte Türdichtung und die ebenfalls nicht dargestellte Öffnungsfeder belastet, sodass es zu einem dichten Anliegen der Rastflächen 12, 13 kommt. Im Tiefengrund 27 der Aufnahme 4 ist erkennbar, dass hier eine von der übrigen Oberfläche der Kante 15 abweichende Oberfläche vorhanden ist, was insbesondere dadurch erreicht wird, dass hier keine Ummantelung 10 vorhanden ist.

## Patentansprüche

1. Verfahren zum Herstellen der Gesperreteile (30, 31) Drehfalle (2) und Sperrklinke (5) eines Kraftfahrzeugschlosses (1), wobei
- Drehfalle (2) und Sperrklinke (5) senkrechte oder annähernd senkrechte Kanten (14, 15) mit korrespondierenden Rastflächen (12, 13) für Drehfalle (2) und Sperrklinke (5) vorgebend ausgestanzt und anschließend unter Freihaltung der Rastflächen (12, 13) mit einer Ummantelung (10) versehen werden;
- nach dem Stanzen der Gesperreteile (30, 31) die Kantenoberfläche des einen Gesperreteils (5, 30) im Rastbereich mit einem Werkzeug eine schräge Kontur (11) erzeugend bearbeitet wird;,
- durch das Stanzen geradlinige Stanzriefen (17, 33) in die Rastfläche (12) des anderen Gesperreteils (2, 31) eingeformt werden;
- als schräge Kontur (11) Riefen (18, 19) und/oder Bearbeitungsrillen (34, 35) in den Rastbereich des einen Gesperreteils (5, 30) eingebracht werden, die im Gegensatz zu den geradlinigen Stanzriefen (17, 33) in einem Winkel (26) versetzt in die Rastfläche (13) des einen Gesperreteils (5, 30) eingeformt werden;
- der Winkel (26) 5 bis 15° beträgt.

2. Verfahren nach dem vorogen Anspruch, wobei
- mit Hilfe der Nachbearbeitung an dem einen Gesperreteil (5, 30) über mechanischen Abtrag im Rastbereich die schräge Kontur (11) eingebracht wird,

3. Verfahren nach einem der vorigen Ansprüche, wobei
- in einem ersten Verfahrensschritt gestanzt und dann in einem zweiten oder weiteren Verfahrensschritt eine schräge Kontur (11) an dem einen Gesperreteil (5, 30), vorzugsweise der Sperrklinke (5) eingefräst wird.

4. Verfahren nach einem der vorhergehenden Ansprüche, wobei
- die Riefen (18, 19) und/oder Bearbeitungsrillen (34,35) mit einer Überdeckung (25,) von mindestens zwei Riefen (18, 19) und/oder Bearbeitungsrillen (34, 35) und der geraden Stanzriefen (17, 33) in die Rastfläche (13) des einen Gesperreteils (5, 30) eingeformt werden.

5. Verfahren nach dem vorigen Anspruch, wobei
- der Winkel (26) und die Überdeckung (25, 25') von der Dicke des einen Gesperreteils (5, 30) und dem Abstand der zu erwartenden Riefen (18, 19) und/oder Bearbeitungsrillen (34, 35) abhängen.

6. Verfahren nach einem der vorhergehenden Ansprüche, wobei
- im Rastbereich von Sperrklinke (2) und Drehfalle (5) beidseitig schräge Riefen (18, 19)/Rillen (34, 35) eingebracht werden, deren Orientierung gegenläufig oder gleichsinnig ist und die eine gezielte Überdeckung von vorzugsweise zwei Riefen beider Gesperreteile (30, 31) gewähren.

7. Kraftfahrzeugschloss (1) mit
- einer Drehfalle (2) und
- einer die Drehfalle (2) im Schließzustand arretierenden Sperrklinke
wobei
- Drehfalle (2) und Sperrklinke (5) korrespondierende Rastflächen (12, 13) auf den beim Stanzen entstehenden senkrechten Kanten (15,16) und eine die Rastflächen (12, 13) freilassende Ummantelung (10) aufweisen,
- das eine Gesperreteil (5, 30), vorzugsweise die Sperrklinke (5), in seiner Rastfläche (13) eine, nach dem Stanzen, gesondert erzeugte schräge Kontur (11) aufweist, während das andere Gesperreteil (2, 31), d. h. vorzugsweise die Drehfalle (2), mit einer beim Stanzen erzeugten, geradlinige Stanzriefen (17, 33) aufweisenden Stanzkontur (14) ausgerüstet ist;.
- der Winkel (26) zwischen den geraden Stanzriefen (17, 33) und den schräg gestellten Riefen (18, 19) der schrägen Kontur (11) 5 bis 15° beträgt.

8. Kraftfahrzeugschloss (1) nach dem vorigen Anspruch, wobei
- die schrägen Riefen (18, 19) auf der Rastfläche (13) der Sperrklinke (5) in Form von Fräsrillen ausgebildet sind.

9. Kraftfahrzeugschloss (1) nach einem der vorhergehenden Ansprüche, wobei
- die Riefen (17, 18, 19) auf den Rastflachen (12, 13) der Gesperreteile (30, 31) ein Ineinandergreifen der Stanzriefen (33) und der gesondert eingebrachten Riefen (18, 19) unterbindend ausgebildet sind.

10. Kraftfahrzeugschloss (1) nach einem der vorhergehenden Ansprüche, wobei
- der Winkel (26) von der Dicke des Gesperreteils (5; 2) und dem Abstand der geraden Stanzriefen (33) abhängt.

11. Kraftfahrzeugschloss (1) nach einem der vorhergehenden Ansprüche, wobei
- die schräg gestellten Riefen (18, 19) in Öffnungsrichtung (32) der Sperrklinke (5) geneigt verlaufend angeordnet sind.

## Claims

1. Procedure to produce the locking parts (30, 31) catch (2) and pawl (5) of a motor vehicle latch (1), whereby
- catch (2) and pawl (5) are stamped out resulting in vertical or virtually vertical edges (14, 15) with corresponding latch surfaces (12, 13) for the catch (2) and pawl (5) and are then equipped with a casing (10), with the latch surfaces (12, 13) being kept free;
- after stamping of the locking parts (30, 31) the edge surface of one of the locking parts (5, 30) is processed in the latch area with a tool which produces oblique contours (11);
- as a result of stamping straight stamping grooves (17, 33) are moulded into the latch surface (12) of the other locking part (2, 31);
- grooves (18, 19) and/or milling grooves (34, 35) are entered into the locking part latch area (5, 30) as an oblique contour (11) which in contrast to the straight stamping grooves (17, 33) is moulded at an angle (26) into the latch surface (13) of the locking part (5, 30);
- the angle (26) is 5 to 15°.

2. Procedure according to the previous claim, whereby
- with the aid of subsequent processing on the locking part (5, 30) via mechanical abrasion in the latch area the oblique contour (11) is inserted,

3. Procedure according to one of the previous claims, whereby
- stamping takes place in the first procedural step and an oblique contour (11) is milled into the locking part (5, 30), preferably the pawl (5), in a second or further procedural step.

4. Procedure according to one of the previous claims, whereby
- grooves (18, 19) and/or milling grooves (34, 35) with a covering (25) of at least two grooves (18, 19) and/or milling grooves (34, 35) and straight stamping grooves (17, 33) are moulded into the latch surface (13) of the locking part (5, 30);

5. Procedure according to the previous claim, whereby
- the angle (26) and the covering (25, 25') are dependent on the thickness of the locking part (5, 30) and the distance of the grooves (18, 19) and/or milling grooves (34, 35) to be expected.

6. Procedure according to one of the previous claims, whereby oblique grooves (18, 19) / milling grooves (34, 35) are inserted in the latch area of the pawl (2) and the catch (5), the orientation of which is in the opposite direction or the same direction and which guarantee specific covering of preferably two grooves of both locking parts (30, 31).

7. Motor vehicle latch (1) with
- a catch (2) and
- a pawl (5) which locks the catch (2) in the closed state,
whereby
the latch surfaces (12, 13) corresponding to the catch (2) and pawl (5) have a casing (10) that leaves the latch surfaces (12, 13) free on the vertical edges (15, 16) arising during stamping,
- a locking part (5, 30), preferably the pawl (5), after stamping, has in its latch surface (13) a separately produced oblique contour (11), while the other locking part (2, 31), i.e. the catch (2) is equipped with a stamping contour (14) having straight-line grooves (17, 33) produced during stamping;
- the angle (26) between the straight stamping grooves (17, 33) and the oblique grooves (18, 19) of the oblique contour (11) is 5 to 15°.

8. Motor vehicle latch (1) according to the previous claim, whereby
- the oblique grooves (18, 19) are designed in the form of milling grooves on the latch surface (13) of the pawl (5).

9. Motor vehicle latch (1) according to one of the previous claims, whereby
- the grooves (17, 18, 19) on the latch surfaces (12, 13) of the locking parts (30, 31) are designed to prevent interlocking of the stamping grooves (33) and the separately inserted grooves (18, 19).

10. Motor vehicle latch (1) according to one of the previous claims, whereby
- the angle (26) is dependent on the thickness of the locking part (5, 2) and the distance of the straight stamping grooves (33).

11. Motor vehicle latch (1) according to one of the previous claims, whereby
- the oblique grooves (18, 19) in the opening direction (32) of the pawl (5) are arranged in an inclined manner.

## Revendications

1. Procédé de fabrication des pièces (30, 31) d'un mécanisme de verrouillage, à savoir un pêne tournant (2) et un cliquet de verrouillage (5) d'une serrure (1) de véhicule à moteur, sachant que
- le pêne tournant (2) et le cliquet de verrouillage (5) sont dotés d'arêtes (14, 15) verticales ou approximativement verticales obtenues par estampage et définissant des surfaces de crantage (12, 13) correspondantes pour le pêne tournant (2) et le cliquet de verrouillage (5), et ensuite dotés d'un enrobage (10) avec maintien des surfaces de crantage (12, 13) dégagées ;
- après l'estampage des pièces (30, 31) du mécanisme de verrouillage, la surface des arêtes de la pièce de verrouillage (5, 30) est usinée dans la zone de crantage avec un outil lui conférant un contour (11) oblique ;
- du fait de l'estampage, des stries d'estampage (17, 33) rectilignes sont modelées dans la surface de crantage (12) de l'autre pièce (2, 31) du mécanisme de verrouillage ;
- comme contour oblique (11) des stries (18, 19) et/ou des rainures d'usinage (34, 35) sont ménagées dans la zone de crantage de la pièce (5, 30) du mécanisme de verrouillage, qui à la différence des stries d'estampage (17, 33) rectilignes sont modelées décalées en angle (26) dans la surface de crantage (13) de la pièce (5, 30) du mécanisme de verrouillage ;
- l'angle (26) est compris entre 5 et 15°.

2. Procédé selon la revendication précédente, sachant que
- le contour (11) oblique est ménagé en retouchant la pièce (5, 30) du mécanisme de verrouillage par abrasion mécanique dans la zone de crantage.

3. Procédé selon l'une des revendications précédentes, sachant que
- un estampage a lieu au cours d'une première étape de procédé et qu'ensuite, au cours d'une deuxième étape de procédé ou d'une étape supplémentaire de procédé, un contour (11) oblique est fraisé contre une pièce (5, 30) du mécanisme de verrouillage, de préférence contre le cliquet de verrouillage (5).

4. Procédé selon l'une des revendications précédentes, sachant que
- les stries (18, 19) et/ou les rainures d'usinage (34, 35) sont modelées avec un recouvrement (25,) d'au moins deux stries (18, 19) et/ou rainures d'usinage (34, 35) et des stries d'estampage (17, 33) droites dans la surface de crantage (13) de la pièce (5, 30) du mécanisme de verrouillage.

5. Procédé selon la revendication précédente, sachant que
- l'angle (26) et le recouvrement (25, 25') dépendent de l'épaisseur de la pièce (5, 30) du mécanisme de verrouillage et de l'écart des stries (18, 19) et/ou rainures d'usinage (34, 35) à attendre.

6. Procédé selon l'une des revendications précédentes, sachant que
- dans la zone de crantage du cliquet de verrouillage (2) et du pêne tournant (5) sont ménagées, des deux côtés, des stries (18, 19) / rainures (34, 35) obliques dont l'orientation est de sens contraire ou de même sens et qui apportent un recouvrement ciblé, de préférence de deux stries, des deux pièces (30, 31) du mécanisme de verrouillage.

7. Serrure (1) de véhicule à moteur comprenant
- un pêne tournant (2) et
- un cliquet de verrouillage (5) retenant le pêne tournant (2) à l'état fermé, sachant que
- le pêne tournant (2) et le cliquet de verrouillage (5) présentent des surfaces de crantage (12, 13) correspondantes sur les arêtes verticales (15, 16) engendrées pendant l'estampage, et un enrobage (10) laissant les surfaces de crantage (12, 13) libres,
- la pièce (5, 30) du mécanisme de verrouillage, de préférence le cliquet de verrouillage (5), présente, dans sa surface de crantage (13), un contour (11) oblique généré séparément après l'estampage, tandis que l'autre pièce (2, 31) du mécanisme de verrouillage, c.-à-d. de préférence le pêne tournant (2) est équipée d'un contour d'estampage (14) présentant des stries rectilignes (17, 33) générées pendant l'estampage ;
- l'angle (26) entre les stries d'estampage (17, 33) rectilignes et les stries (18, 19) en position oblique du contour oblique (11) est compris entre 5 et 15°.

8. Serrure (1) de véhicule à moteur selon la revendication précédente, sachant que
- les stries obliques (18, 19) sur la surface de crantage (13) du cliquet de verrouillage (5) sont configurées en forme de rainures de fraisage.

9. Serrure (1) de véhicule à moteur selon l'une des revendications précédentes, sachant que
- les stries (17, 18, 19) sur les surfaces de crantage (12, 13) des pièces (30, 31) du mécanisme de verrouillage sont configurées pour empêcher un engrènement des stries d'estampage (33) et des stries (18, 19) ménagées à part.

10. Serrure (1) de véhicule à moteur selon l'une des revendications précédentes, sachant que
- l'angle (26) dépend de l'épaisseur de la pièce (5 ; 2) du mécanisme de verrouillage et de l'espacement des stries d'estampage (33) droites.

11. Serrure (1) de véhicule à moteur selon l'une des revendications précédentes, sachant que
- les stries (18, 19) en position oblique sont disposées selon un tracé incliné dans le sens d'ouverture (32) du cliquet de verrouillage (5).
